# DEMANDE DE BREVET EUROPEEN

(11) **EP 0 871 005 A2**
(43) Date de publication de la demande: **14.10.1998**
(21) Numéro de dépôt: 98870071.2
(22) Date de dépôt: 06.04.1998
(51) Int. Cl.: F28D 9/00, F28F 21/06

(54) **Echangeurs de chaleur à contre courant composés e.a. de panneaux creux extrudés**

(30) Priorité: 10.04.1997 BE 9700327
(71) Demandeur: De Lepeleire, Guido, 3001 Leuven (BE)
(72) Inventeur: De Lepeleire, Guido, 3001 Leuven (BE)

(57) **Abrégé**

Echangeurs de chaleur composés de un ou plusieurs éléments d'échangeur semblables branchés en parallèle, chaque élément ((58) ou (912)) ayant une zone centrale (11) à contrecourant et deux zones (77) à courants croisés près des entrées (F1,F2) et sorties (F1',F2') des fluides qui moyennant deux collecteurs (44) à section triangulaire sont rassemblés dans une seule entrée de fluide primaire (F1) prés d'une seule sortie de fluide secondaire (F2'), et dans une seule entrée de fluide secondaire (F2) près d'une seule sortie de fluide primaire (F1'), les éléments d'échangeur se composant de panneaux creux extrudés (1), (7) découpés et assemblés pour faire communiquer les conduits (2) dans les dits panneaux avec des fentes entre ces panneaux.

## Description

La présente invention concerne des échangeurs de chaleur à plaques construits à partir de panneaux creux extrudés, les panneaux étant découpés et assemblés de façon particulière pour assurer le fonctionnement en contre-courant.

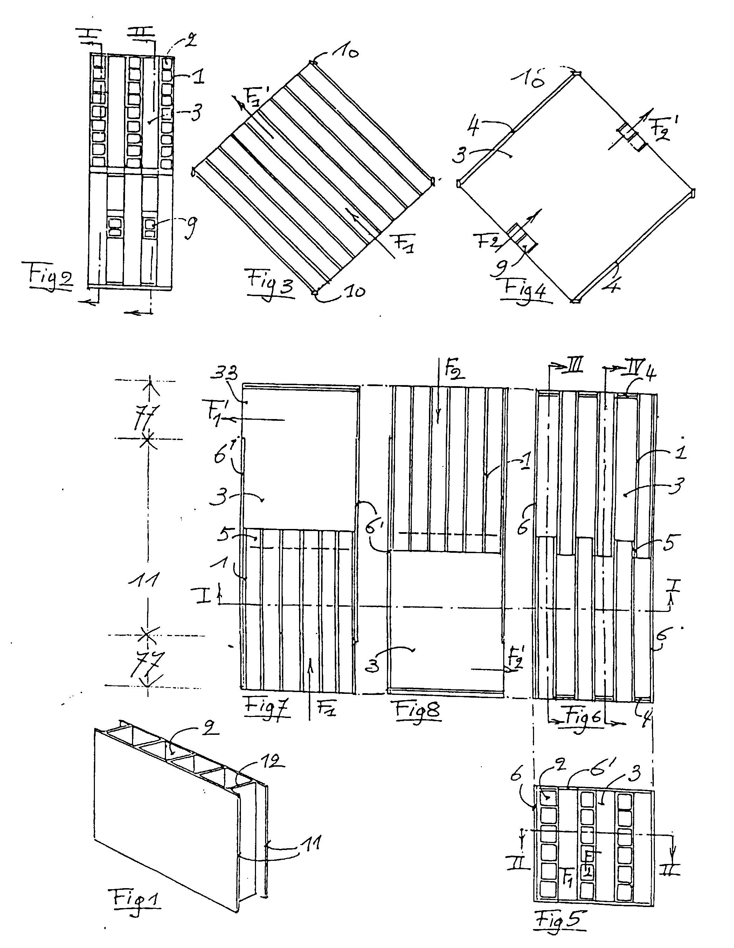

Des échangeurs de chaleur à plaques se font en diverses versions, surtout pour des applications à caractère "symétrique" (par exemple air/air ,avec des débits très similaires et sous des différences de pression et de température modérées comme par exemple dans la climatisation).On préfère souvent les courants croisés pour la simplicité constructive, et malgré les performances modestes. On utilise différents matériaux comme le verre, des métaux, des matières plastiques, et des formes différentes comme par exemple des plaques rigides, des feuilles mises en relief, ou des combinaisons variées. La présente invention introduit un nouveau concept qui utilise des panneaux creux extrudés qui sont découpés et assemblés de telle sorte que l'échangeur dans sa zone centrale opère en contrecourant dont on connait les avantages. Ceci est expliqué dans le texte qui suit, avec les figures 1 à 14, qui sont données à titre d'illustration d'un concept qui bien sur peut se concrétiser de différentes façons.

La figure 1 montre une vue en perspective d'un panneau creux extrudé.

Les figures 2 à 4 montrent un échangeur à courants croisés, notamment:

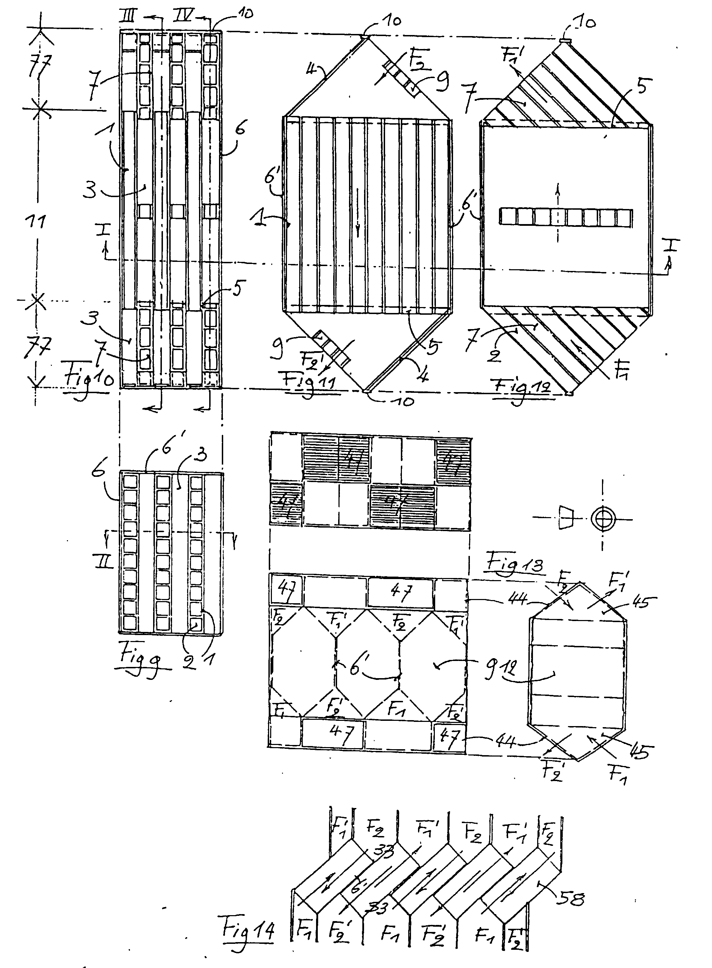

Fig.2 : une vue de l'échangeur;
Fig.3 : la coupe I de la figure 2;
Fig.4 : la coupe II de la figure 2.
Les figures 5 à 8 montrent un élément d'échangeur (58) notamment:
Fig.5 : la coupe I des figures 6,7,8;
Fig.6 : la coupe II de la figure 5;
Fig.7 : la coupe III de la figure 6;
Fig.8 : la coupe IV de la figure 6.
Les figures 9 à 12 montrent un autre élément d'échangeur (912),notamment:
Fig.9 : la coupe I des figures 10,11,12;
Fig.10 : la coupe II de la figure 9;
Fig.11 : la coupe III de la figure 10;
Fig.12 : la coupe IV de la figure 10.
La figure 13 donne trois vues d'un branchement en parallèle d'éléménts (912).
La figure 14 montre une coupe d'un branchement en parallèle d'éléments (58).

La figure 1 montre un panneau creux (1), qui a été découpé d'une pièce de matière plastique extrudée. On distingue deux plaques (11) parallèles reliées par des entretoises (12) elles aussi parallèles entr'elles, et en équerre sur les plaques (11) susdites. Le panneau (1) offre donc des petits conduits (2), à section rectangulaire. Ils'agira en pratique de quelques millimètres carrés, l'épaisseur des plaques (11) et des entretoises (12) se disant en dixiémes de millimètre.

Une pile de panneaux (1) selon la figure 1 de forme carrée, les conduits (2) se croisant à angle droit, peut constituer un échangeur de chaleur à courants croisés très simple. Mieux vaut un arrangement selon les figures 2 à 4. Ici on met les panneaux (1) tous avec les conduits (2) parallèles. Entre plaques (1) voisines on impose des fentes (3) en collant des baguettes (4) en équerre sur les conduits (2), ceci sur les bords des plaques (1). On peut augmenter le rigidité de l'ensemble par des petits supports (9) intermédiaires de même épaisseur que les baguettes (4) susdites. Eventuellement on peut découper les pièces (4) et (9) à partir des mêmes plaques extrudées que les panneaux (1).Les coins peuvent être renforcés par des baguettes soudées (10). Ainsi de l'air frais (F1) par exemple peut circuler à travers les conduits (2) des panneaux (1), l'air vicié (F2) circulant dans les fentes (3), en courants croisés vis à vis de l'air frais (F1). Les entrées d'air sont marquées (F1,F2), les sorties (F1',F2').

Les figures 5 à 8 montrent un autre concept qui permet partiellement le contrecourant. Dans ce cas des panneaux (1) coupés en rectangle, munis d'une baguette (4) collée en équerre sur les conduits (2) sur une des extrémités sont empilées avec un petit recouvrement (5). Ainsi on constitue un ensemble en forme de parallélipipède de panneaux (1) et de fentes (3), d'une longueur de presque deux fois la longueur des panneaux (1) utilisés. Les faces externes parallèles aux panneaux sont couverts d'une plaque plane (6) sur toute la longueur. Les faces en équerre sur les précédentes et parallèles aux conduits (2) sont couverts par des plaques (6') un peu plus courtes posées de sorte que les fentes (3) restent accessibles par des portes latérales (33). Ces portes peuvent se situer sur une diagonale : par exemple à gauche en haut à la figure 7, à droite en dessous à la figure 8. Cet ensemble constitue un élément d'échangeur de chaleur (58), avec des entrées d'air (F1,F2) et des sorties d'air (F1',F2').

La coupe I de la figure 5 fait voir comment donc un débit (F1) peut circuler entre des panneaux creux (1) voisins tandis qu'un débit (F2) circule dans ces mêmes panneaux. La coupe III de la figure 7 montre comment par exemple un débit (F1) peut entrer à travers les petits conduits (2) dans les panneaux (1), continuer par les fentes (3) entre plaques (1) ,et sortir latéralement par les portes (33) dans une face externe en équerre sur les panneaux (1) et les fentes (3). La coupe IV tout à fait similaire montre la route à suivre par un débit (F2) .

Dans la zone centrale (11) de l'échangeur les débits (F1) et (F2) circulent en contrecourant , tandis qu'aux extrémités (77) le courant croisé est imposé localement par les baguettes (4) .Evidemment les deux débits peuvent circuler en sens inverse, toujours en contrecourant dans la zone centrale, et de tels échangeurs peuvent s'utiliser en d'autres positions et orientations . Aussi peut on utiliser des plaques (6') plus courtes et les poser de sorte que les fentes (3) restent libres aux deux extrémités des baguettes (4). Dans ce cas chaque débit (F1,F2) dispose de deux portes (33). Cette option peut être intéressante mais ne convient pas pour le branchement en parallèle de plusieurs éléments d'échangeur, qui sera discuté plus loin.

Les figures 9 à 12 illustrent un autre concept qui lui aussi réalise le contrecourant, tout en offrant une plus grande flexibilité pour le raccordement des conduits de fluide. D'abord la coupe I (Fig.9) perpendiculaire aux petits conduits (2) est tout à fait similaire à la coupe I de la figure 5. Ici aussi un débit (F1) circule entre des panneaux (1), un débit (F2) - dans ces panneaux . Les faces externes parallèles aux conduits (2) sont couvertes de plaques (6) et (6'). Cependant, les zones (77) des courants croisés sont réalisées par des panneaux creux (7) découpés en triangle .Ces panneaux sont collés avec un recouvrement limité (5) entre les panneaux (1) de la zone centrale, les conduits (2) des panneaux (7) se situant en oblique (par exemple à 45°). Entre les bords des panneaux (7) des baguettes (4) d'une épaisseur égale à celle des panneaux sont collées, en équerre sur les conduits (2). Pour des échangeurs assez grands la rigidité de l'ensemble peut être augmentée par des pièces d'appui (9), par exemple découpées de panneaux creux. L'arête en saillie du paquet de panneaux (7) peut être renforcée par une baguette (10) soudée, qui pourra recevoir une bande d'étanchéité lors du raccordement des conduits de fluide. L'ensemble constitue un élément d'échangeur de chaleur (912).

Les figures 11 et 12 font voir comment un débit (F1) par exemple peut circuler par les petits conduits (2) des panneaux (7) dans les zones de courants croisés (77) près des entrées et sorties, et entre les panneaux (1). Un débit (F2) par contre circule entre les panneaux (7), et dans les petits conduits des panneaux (1) dans la zone centrale (11) de contrecourant.. De cette façon les débits (F1) et (F2) suivent des parcours différents, et probablement rencontrent des pertes de pression différentes. Si cela est considéré gênant on peut assurer une symétrie parfaite en construisant la zone centrale de contre-courant (11) en deux parties comme exposé aux figures 5 à 8. Dans ce cas les deux parcours sont identiques: par exemple entrée à travers des panneaux (7), contre-courant entre des panneaux (1) ensuite à travers des panneaux (1), et sortie entre des panneaux (7) (ou l'inverse).

Un élément d'échangeur (912) peut être utilisé comme tel, seul. Cependant la figure 13 (qui donne trois vues) fait voir comment des éléments (912) peuvent se brancher en parallèle. Par exemple trois éléments (912) selon les figures 9 à12 sont juxtaposés de sorte que les faces (6') se touchent, les faces obliques des zones (77) à fonction similaire se trouvant ensemble. Par exemple entrée (sortie) (F1) à côté de entrée (sortie) (F1). Idem pour F2. Le raccordement aux conduits d'amenée et d'évacuation se fait par des collecteurs (44) à section triangulaire, par exemple en tôle, munis de cloisons internes triangulaires (45) pour séparer les différents débits. Chacune des quatre faces obliques (46) de ces collecteurs (44) offrent un groupement d'orifices (47) similaires ce qui permet donc d'y raccorder les conduits appropriés (F1,F1',F2,F2'). Selon les circonstances ces conduits peuvent s'installer soit en parallèle soit en équerre vis à vis des conduits (2) dans la zone centrale des éléments (912).

La figure 14 montre un branchement en parallèle d'éléments (58) selon les figures 5 à 8. Plusieurs éléments 58 sont juxtaposés en oblique de sorte que les faces (6') se touchent, et que les portes (33) des fentes (3) restent libres, comme les faces constituées par les bouts ouverts des conduits (2).A travers des collecteurs à section triangulaire (44) similaires à ceux montrés à la figure 13 l'échangeur composé d'éléments (58) peut donc facilement se raccorder aux conduits (F1,F2',F2,F1').

Les concepts proposés ici offrent quelques avantages nouveaux vis à vis des échangeurs usuels à courants croisés. Pour une même surface investie le contrecourant donne un meilleur rendement, ou inversément une plus petite surface suffira pour obtenir un même rendement. D'autre part le contrecourant offre une température de sortie plus égale que les courants croisés. Dés lors, avec un rendement comparable ou même supérieur il résistera mieux au gel du condensat dans l'air vicié en régime d'hiver. Le branchement en parallèle d'éléments du type (58) ou (912) permet de construire des échangeurs à contre-courant à grande surface frontale et une profondeur relativement faible ce qui favorise le rendement thermique tout en limitant les pertes de charge . On peut attendre une excellente résistance mécanique et chimique, et une longue durée de vie si on utilise par exemple le polypropylène, matière solide parfaitement soudable et recyclable. Le côut sera modéré si on utilise des produits extrudés en grande masse pour d'autres usages comme par exemple l'emballage. Les applications possibles sont nombreuses. Outre la récuperation de chaleur à partir de l'air vicié déjà suggéré il y a le conditionnement d'air ou d'autres gaz (par exemple le séchage), et chaque cas où il s'agit d'échanger de la chaleur en situation presque symétrique sous des différences de température et de pression limitées.

## Revendications

1. Un échangeur de chaleur à plaques caractérisé par le fait qu'il est constitué entr'autres de panneaux creux extrudés (1).

2. Un échangeur de chaleur selon la revendication 1 ci-dessus, caractérisé par le fait que les débits de fluide (F1 et F2) véhiculés circulent dans des petits conduits (2) dans les panneaux creux (1), et aussi dans des fentes (3) entre panneaux creux voisins parallèles.

3. Un échangeur de chaleur selon la revendication 2 ci-dessus caractérisé par le fait que chacun des débits (F1,F2) circule d'abord dans-,ensuite entre les panneaux creux (1),et/ou en sens inverse.

4. Un élémént d'échangeur de chaleur selon la revendication 3 ci-dessus,caractérisé par le fait chacun des fluides véhiculés (F1,F2) circule d'abord dans les conduits (2) dans des panneaux (1) coupés en rectrangle,ensuite dans la même direction dans des fentes (3) entre panneaux creux voisins qui moyennant un petit recouvrement (5) sont fixés sur les deux faces des panneaux susdits, pour enfin sortir de ces fentes (3) transversalement, de sorte que dans la zone centrale (11) le contrecourant s'établit, tandis que les courants croisés dominent près des entrées et sorties (Fig. 5 à 8)

5. Un élément d'échangeure de chaleur selon la revendication 4 ci-dessus caractérisé par le fait que les fluides (F1,F2) circulent en sens inverse.

6. Un élément d'échangeur de chaleur selon la revendication 3 ci-dessus caractérisé par le fait qu'il est constitué d'une zone centrale de contrecourant (11) comportant des panneaux creux extrudés (1) rectangulaires et des fentes (3) entre ces panneaux , l'ouverture des fentes étant égale à l'épaisseur des panneaux, cette zone centrale étant complétée aux bouts des conduits (2) des panneaux (1) par des panneaux creux similaires (7) découpés en triangle et disposés de sorte que leurs petits conduits (2) s'orientent en oblique vis à vis des petits conduits (2) dans la zone centrale susdite, ces panneaux (7) étant fixés avec un certain recouvrement (5) entre les plaques (1) rectangulaires de la zone centrale et munis de baguettes (4) en équerre sur les conduits (2) obliques.

7. Un élément d'échangeur de chaleur selon la revendication 6 ci-dessus caractérisé par le fait que la zone centrale de contre-courant (11) se compose de deux moitiés notamment un premier paquet de panneaux creux (1) avec des fentes (3) entre panneaux dont la largeur est égale à l'épaisseur des panneaux et un second paquet similaire dont les panneaux (1) sont fixés avec un certain recouvrement (5) entre les panneaux (1) du premier paquet de sorte que les petits conduits (2) dans un paquet communiquent avec les fentes (3) dans l'autre paquet.

8. Un échangeur de chaleur à plaques caractérisé par le fait qu'il est constitué d'éléments d'échangeur selon une ou plusieures des revendications ci-dessus.
